# EUROPÄISCHE PATENTSCHRIFT

(11) **EP 3 704 078 B1**
(45) Veröffentlichungstag und Bekanntmachung des Hinweises auf die Patenterteilung: **24.07.2024**
(21) Anmeldenummer: 18811704.8
(22) Anmeldetag: 18.10.2018
(51) Int. Cl.: C05D 1/02, C05D 1/04, C05D 3/00, C05D 5/00, C05D 9/02

(54) **VERFAHREN ZUR HERSTELLUNG POLYHALITHALTIGER DÜNGEMITTELGRANULATE**
PROCESS FOR PREPARING POLYHALITE-CONTAINING FERTIZLER GRANULES
PROCEDÉ POUR LA PRODUCTION DE GRANULÉS D'ENGRAIS CONTENANT DE LA POLYHALITE

(30) Priorität: 30.10.2017 DE 102017010084
(43) Veröffentlichungstag der Anmeldung: 09.09.2020
(73) Patentinhaber: K+S Aktiengesellschaft, 34131 Kassel (DE)
(72) Erfinder: KOPF, Sebastian, 36433 Bad Salzungen (DE); THENERT, Stefan, 36266 Heringen (DE); BAUCKE, Guido, 36277 Schenklengsfeld OT Wippershain (DE)
(74) Vertreter: Meissner Bolte Partnerschaft mbB
(86) Internationale Anmeldenummer: PCT/DE2018/000294
(87) Internationale Veröffentlichungsnummer: WO 2019/086060

(56) Entgegenhaltungen:
- DD-A1- 249 007
- DE-A1- 102014 014 100
- DE-B3- 102007 049 182
- ALBADARIN AHMAD B ET AL: "Granulated polyhalite fertilizer caking propensity", POWDER TECHNOLOGY, vol. 308, 8 December 2016 (2016-12-08), pages 193 - 199, XP029890407, ISSN: 0032-5910, DOI: 10.1016/J.POWTEC.2016.12.004

## Beschreibung

Die vorliegende Erfindung betrifft ein Verfahren zur Herstellung polyhalithaltiger Düngemittelgranulate, umfassend eine Pressagglomeration einer Salzmischung, die feinteiliges Polyhalit enthält.

Polyhalit ist ein Mineral aus der Klasse der Sulfate und weist folgende chemische Zusammensetzung auf: K₂Ca₂Mg[SO₄]₄·2H₂O. Polyhalit kristallisiert triklin in der Raumgruppe P1 (Raumgruppen-Nr. 2) mit den Gitterparametern *a* = 11.689 Ä; *b* = 16.332 Ä; *c* = 7,598 Ä; α = 91.65°; β = 90,0° und γ = 91,9° sowie vier Formeleinheiten pro Elementarzelle (Handbook of Mineralogy Vol. V - Polyhalite, 2003, The Mineralogical Society of America). Größere Vorkommen an Polyhalit findet man in Europa unter anderem in Österreich, Deutschland und Großbritannien sowie außerhalb Europas in den USA, China, Indien, Ukraine, Türkei und Iran.

Aufgrund der Kombination der Pflanzennährstoffe Kalium, Magnesium und Schwefel in Form des Sulfats ist Polyhalit als Mineraldünger geeignet und wirkt sich vorteilhaft auf verschiedene Qualitätskriterien und die Vitalität der damit gedüngten Kulturen aus. Als Düngemittel wird Polyhalit vornehmlich in Form von Produkten mit Korngrößen im Bereich von 2 bis 5 mm angeboten, beispielsweise als Rollagglomerate oder als ein durch mechanisches Zerkleinern von bergmännisch abgebautem Polyhalit hergestelltes Produkt. Beim Zerkleinern des bergmännisch abgebauten Polyhalits fallen größere Mengen an feinteiligem Polyhalit an, bei dem in der Regel wenigstens 80 Gew.-%, insbesondere wenigstens 90 Gew.-% der Polyhalit-Partikel Korngrößen von maximal 2 mm, insbesondere von maximal 1,5 mm aufweisen. Dieses feinteilige Polyhalit ist als Düngemittel weniger geeignet, da es nicht zuletzt aufgrund der geringen Korngröße schwierig zu handhaben ist.

Es besteht daher grundsätzlich ein Bedarf an einem Verfahren, das die Weiterverarbeitung größerer Mengen feinteiligen Polyhalits zu Düngemittelgranulaten erlaubt. Leider ist die Duktilität des Polyhalit gering, so dass eine Pressgranulierung bzw. Pressagglomeration des feinteiligen Polyhalits nicht zu mechanisch stabilen Granulaten führt.

Die DE102013004597 beschreibt ein Verfahren zur Herstellung von Granulaten aus nicht duktilen, sulfatischen Salzen wie Polyhalit oder Langbeinit, bei dem man eine Mischung des feinteiligen Salzes mit einer größeren Menge eines zähflüssigen, zuckerhaltigen Abfallprodukts der Rohr- oder Rübenzuckerherstellung einer Pressgranulierung unterwirft. Hierbei wird die Mischung zunächst zu Schülpen verpresst, die man vor der Zerkleinerung zum fertigen Granulat mehrere Stunden reifen lassen muss, da die Schülpen anfänglich noch sehr weich sind. Die erreichten Festigkeiten sind nicht zufriedenstellend. Zudem erfordert das Verfahren aufgrund der Reifungsphase einen höheren apparativen Aufwand, da die Schülpen nicht direkt weiterverarbeitet werden können sondern zwischengelagert werden müssen.

US 2017/0137333 beschreibt die Herstellung von Polyhalit-Granulaten aus feinteiligem Polyhalit, bei dem man das feinteilige Polyhalit zunächst mit einem Bindemittel, vorzugsweise mit vorgequollener Stärke, vermischt und anschließend mit einem Mischer mit etwa 5 Gew.-% Wasser besprüht, um ein voragglomeriertes Produkt zu erhalten. Dieses voragglomerierte Produkt wird auf einem Pelletier-Teller unter Zusatz von weiterem Wasser zu einem Agglomerat weiterverarbeitet. Das Verfahren ist im Vergleich zu einer Pressagglomeration apparativ aufwändig. Zudem erfordert der vergleichsweise große Einsatz an Wasser einen hohen Energieaufwand für die Trocknung der Granulate.

DD249007 beschreibt ein Verfahren zur Herstellung eines sulfatischen, chlorarmen Kalimagnesiumdüngemittels.

Aufgabe der vorliegenden Erfindung ist daher die Bereitstellung eines Verfahrens, das es in einfacher und effizienter Weise erlaubt, größere Mengen feinteiligen Polyhalits zu Düngemittelgranulaten mit ausreichender mechanischer Festigkeit zu verarbeiten.

Es wurde überraschenderweise gefunden, dass Salzmischungen aus feinteiligem Polyhalit mit feinteiligem Kaliumchlorid, in denen das Massenverhältnis von feinteiligem Polyhalit zu feinteiligem Kaliumchlorid im Bereich von 1 : 5 bis 4 : 1, insbesondere im Bereich von 1 : 3 bis 3 : 2 liegt, sich in einfacher Weise durch eine Pressagglomeration zu einem Granulat mit ausreichend hoher Festigkeit verarbeiten lässt.

Dementsprechend betrifft die vorliegende Erfindung ein in den Ansprüchen definiertes Verfahren zur Herstellung polyhalithaltiger Düngemittelgranulate, umfassend eine Pressagglomeration einer Salzmischung aus feinteiligem Polyhalit mit feinteiligem Kaliumchlorid, wobei das Massenverhältnis von feinteiligem Polyhalit zu feinteiligem Kaliumchlorid im Bereich von 1 : 5 bis 4 : 1, insbesondere im Bereich von 1 : 4 bis 3 : 2 liegt.

Die nach dem erfindungsgemäßen Verfahren erhältlichen Granulate zeichnen sich durch ausreichende mechanische Festigkeit, insbesondere akzeptable Bruchfestigkeitswerte und akzeptable Abriebswerte aus. Von Vorteil ist weiterhin, dass die bei dem Verfahren anfallenden Schülpen direkt zu den Granulaten weiterverarbeitet werden können.

Unter Polyhalit versteht man erfindungsgemäß ein Mineral, das einen Gehalt an kristallinem K₂Ca₂Mg[SO₄]₄·2H₂O von in der Regel wenigstens 85 Gew.-%, insbesondere wenigstens 90 Gew.-% aufweist. Bei dem im erfindungsgemäßen Verfahren eingesetzten Polyhalit handelt es sich um nichtkalziniertes Polyhalit. In der Regel handelt es sich um ein Polyhalit in der auf dem Markt üblichen Qualität. Vorzugsweise ist das Polyhalit ein beim Zerkleinern eines bergmännisch abgebauten Polyhalits anfallender feinteiliger Polyhalit und/oder Polyhalit-Staub. Bei dem Polyhalit kann es sich aber auch um Rückgut aus einer Herstellung eines polyhalithaltigen Granulats handeln.

Neben dem kristallinem K₂Ca₂Mg[SO₄]₄·2H₂O kann das Polyhalit auch in untergeordnetem Maße andere Alkali- und Erdalkalimetallsalze, insbesondere in Form der Chloride und Sulfate, enthalten. Typischerweise wird ein im erfindungsgemäßen Verfahren eingesetztes Polyhalit etwa folgende Zusammensetzung aufweisen:
Kalium: 11,0 bis 13,0 Gew.-%;
Magnesium: 3,4 bis 4,3 Gew.-%;
Calcium: 11,0 bis 13,5 Gew.-%;
Sulfat: 55,0 bis 64,0 Gew.-%;

Außerdem enthält das Polyhalit Kristallwasser, typischerweise in Mengen von 5,0 bis 7,0 Gew.-%. Der Kristallwassergehalt kann über den Glühverlust bei 550°C bestimmt werden. Die Restfeuchte des Polyhalits, bedingt durch anhaftende Feuchtigkeit wird in der Regel 0,5 Gew.-%, bezogen auf das Polyhalit, nicht überschreiten und liegt typischerweise im Bereich von 0,1 bis 0,4 Gew.-%. Der Trocknungsverlust wird typischerweise in Anlehnung an DIN EN 12880:2000 bestimmt, indem man eine Probe des Polyhalits bei Temperaturen im Bereich von 105 ± 5 °C bei Umgebungsdruck bis zur Gewichtskonstanz trocknet.

Der Natriumgehalt des im erfindungsgemäßen Verfahren eingesetzten Polyhalits liegt in der Regel unterhalb 2 Gew.-% und der Chloridgehalt liegt typischerweise unterhalb 5 Gew.-%.

Unter dem Begriff "feinteililg" in Bezug auf das Polyhalit versteht man ein für die Herstellung von Granulaten übliches Kornband, bei dem typischerweise wenigstens 80 Gew.-%, insbesondere wenigstens 90 Gew.-% der Polyhalit-Körner eine Korngröße von maximal 2 mm, insbesondere maximal 1,5 mm und speziell maximal 1,2 mm aufweisen und vorzugsweise Korngrößen im Bereich von 0,01 bis 2 mm, insbesondere im Bereich von 0,1 bis 1,5 mm, und speziell im Bereich von 0,2 bis 1,2 mm, bestimmt mittels Siebanalyse nach DIN 66165:2016-08, aufweisen. Die mittlere Korngröße (Gewichtsmittel, d₅₀-Wert) des Kaliumchlorids liegt typischerweise im Bereich von 50 µm bis 1500 µm, insbesondere im Bereich von 100 µm bis 1200 µm. Der d₉₀-Wert des im erfindungsgemäßen Verfahren eingesetzten Polyhalits liegt in der Regel bei maximal 2 mm, insbesondere maximal 1,5 mm und speziell maximal 1,2 mm.

Bei den hier und im Folgenden angegebenen Korngrößen handelt es sich in der Regel um diejenigen Werte, wie sie mittels Siebanalyse nach DIN 66165:2016-08 bestimmt werden. Die Ermittlung der Massenanteile der jeweiligen Korngrößen bzw. Korngrö-βenbereiche erfolgt nach Maßgabe der DIN 66165:2016-08 durch Fraktionierung des dispersen Guts unter Verwendung von mehreren Sieben mittels maschineller Siebung in vorkalibrierten Systemen. Sofern nichts anderes angegeben ist, sind Prozentangaben im Zusammenhang mit Teilchen- bzw. Korngrößen als Angaben in Gew.-% zu verstehen. In diesem Zusammenhang bezeichnet der d₉₀-Wert diejenige Korngröße, die von 90 Gew.-% der Salzkörner unterschritten wird. Der d₁₀-Wert bezeichnet diejenige Korngröße, die von 10 Gew.-% der Salzkörner unterschritten wird. Der d₅₀-Wert bezeichnet die gewichtsmittlere Korngröße. Die Korngrößenverteilung kann auch durch Laserlichtstreuung (Laserlichtbeugung), beispielsweise nach der in ISO 13320:2009 angegebenen Methode, bestimmt werden, insbesondere im Falle sehr kleiner Partikel mit Partikelgrößen < 200 µm.

Bei dem feinteiligen Kaliumchlorid kann es sich grundsätzlich um ein festes Kaliumchlorid handeln, das ein für die Herstellung von Kaliumchlorid-Granulaten übliches Kornband aufweist, wobei typischerweise wenigstens 80 Gew.-%, insbesondere wenigstens 90 Gew.-% der Kaliumchlorid-Körner eine Korngröße von maximal 2 mm, insbesondere maximal 1,5 mm und speziell maximal 1,2 mm aufweisen und vorzugsweise wenigstens 80 Gew.-%, insbesondere wenigstens 90 Gew.-% der Kaliumchlorid-Körner Korngrößen im Bereich von 0,01 bis 2 mm, insbesondere im Bereich von 0,02 bis 1,5 mm, und speziell im Bereich von 0,05 bis 1,2 mm, bestimmt mittels Siebanalyse nach DIN 66165:2016-08, aufweisen. Die mittlere Korngröße (Gewichtsmittel) des Kaliumchlorids liegt typischerweise im Bereich von 20 µm bis 1000 µm, insbesondere im Bereich von 50 µm bis 800 µm. Der d₉₀-Wert des im erfindungsgemäßen Verfahren eingesetzten Kaliumchlorids liegt in der Regel bei maximal 2 mm, insbesondere maximal 1,5 mm und speziell maximal 1,2 mm.

Das erfindungsgemäße Verfahren ist in der Regel für beliebige Kaliumchlorid-Qualitäten geeignet. Typischerweise wird ein Kaliumchlorid mit Kaliumgehalten von wenigstens 50 Gew.-%, gerechnet als K₂O, entsprechend einem Gehalt von Kaliumchlorid von wenigstens 80 Gew.-%, eingesetzt. Insbesondere weist ein solches Kaliumchlorid einen Gehalt an KCl von wenigstens 85,0 Gew.- %, z.B. im Bereich von 85,0 bis 99,9 Gew.-%, insbesondere wenigstens 90 Gew.-%, z.B. im Bereich von 90 bis 99,9 Gew.-%, jeweils bezogen auf die von Wasser verschiedenen Bestandteile des Kaliumchlorids, auf. Neben KCl kann das Kaliumchlorid auch andere, von Kaliumchlorid und Wasser verschiedene Bestandteile enthalten. Bei diesen Bestandteilen handelt es sich insbesondere um Natriumchlorid, Bromide des Natriums oder des Kaliums oder Erdalkalimetallhalogenide wie Magnesiumchlorid und Calciumchlorid und deren Oxide. Die Gesamtmenge derartiger Bestandteile wird in der Regel 20 Gew.-%, insbesondere 15 Gew.% und speziell 10 Gew.-% nicht überschreiten und liegt typischerweise im Bereich von 0,1 bis 20 Gew.-%, insbesondere im Bereich von 0,1 bis 15 Gew.-% und speziell im Bereich von 0,1 bis 10 Gew.-%.

Die Herstellung der polyhalithaltigen Düngemittelgranulate, umfasst erfindungsgemäß eine Pressagglomeration einer Salzmischung aus Polyhalit und Kaliumchlorid. Die im erfindungsgemäßen Verfahren eingesetzte Salzmischung kann ausschließlich aus dem Gemisch aus Polyhalit und Kaliumchlorid bestehen oder kann auch untergeordnete Mengen weiterer Salze sowie Wasser, das nicht als Kristallwasser gebunden ist, enthalten. Erfindungsgemäß machen K₂Ca₂Mg[SO₄]₄·2H₂O und KCl wenigstens 80 Gew.-% und insbesondere wenigstens 85 Gew.-% der Gesamtmasse der in der zur Pressagglomeration eingesetzten Salzmischung enthaltenen festen Bestandteile aus, d.h. der Bestandteile, die von etwaigen, nicht als Kristallwasser gebundenen Wasser verschieden sind. Dementsprechend wird der Anteil an Salzen, die von K₂Ca₂Mg[SO₄]₄·2H₂O und KCI verschieden ist, in der Regel 20 Gew.-% und speziell 15 Gew.-%, bezogen auf die Gesamtmasse der festen Bestandteile der Salzmischung, nicht überschreiten.

Erfindungsgemäß liegt das Massenverhältnis von feinteiligem Polyhalit zu feinteiligem Kaliumchlorid in der zur Pressagglomeration eingesetzten Salzmischung im Bereich von 1 : 5 bis 4 : 1, insbesondere im Bereich von 1 : 3 bis 3 : 2. Der Massenanteil an feinteiligem Kaliumchlorid wird dabei vorzugsweise 80 Gew.-% und insbesondere 75 Gew.-%, bezogen auf die Gesamtmasse der in der Salzmischung enthaltenen festen Bestandteile, nicht überschreiten, um ausreichend hohe Sulfatgehalte im Düngemittelgranulat zu gewährleisten. Der Anteil an Kaliumchlorid wird vorzugsweise 25 Gew.-%, insbesondere 30 Gew.-% und speziell 40 Gew.-% der Gesamtmasse der in der Salzmischung enthaltenen festen Bestandteile nicht unterschreiten, um ausreichende Festigkeiten der Granulate zu erzielen.

Weitere Salze sind neben etwaigen Verunreinigungen, die in dem eingesetzten Polyhalit und Kaliumchlorid enthalten sind, sulfatische Natrium- und Kaliumsalze und Magnesiumsalze wie Kaliumsulfat, Natriumsulfat, Magnesiumsulfate wie Kieserit und Langbeinit, MgO, MgCO₃, und Calciumsulfat, einschließlich seiner Hydrate, sowie salzartige Mikronährstoffe, wie sie häufig in Düngemitteln eingesetzt werden. Zu den salzartigen Mikronährstoffen zählen salzartige Borverbindungen sowie Salze und Komplexverbindungen der Elemente Mangan, Zink, Kupfer, Eisen und Molybdän. Mangan, Kupfer und Zink werden dabei vorzugsweise in Form ihrer Sulfate eingesetzt. Kupfer und Eisen werden vorzugsweise auch in Form von Chelaten, z. B. mit EDTA, eingesetzt. Bor wird vorzugsweise als Calcium-Natrium-Borat, z. B. in Form von Ulexit, Natriumborat, Kaliumborat oder Borsäure eingesetzt. Molybdän wird vorzugsweise als Natrium- oder Ammoniummolybdat oder als Mischung davon eingesetzt. Typischerweise wird der Anteil an von Bor verschiedenen Mikronährstoffen, gerechnet in ihrer elementaren Form, 1 Gew.-%, bezogen auf die Gesamtmasse der Salzmischung, nicht überschreiten. Der Gehalt an Bor, gerechnet als B₂O₃ wird in der Regel 3 Gew.-% nicht überschreiten und liegt typischerweise, sofern enthalten, im Bereich von 0,01 bis 3 Gew.-%, insbesondere 0,01 bis 2 Gew.-%, bezogen auf die Gesamtmasse der Bestandteile der erfindungsgemäß eingesetzten Salzmischung.

Weiterhin können die zur Pressagglomeration eingesetzten Salzmischungen auch organische Bindemittel enthalten, beispielsweise Tylose, Melasse, Gelatine, Stärke, Ligninsulfonate oder Salze von Polycarbonsäuren wie Natriumcitrat oder Kaliumcitrat oder Fettsäuresalze wie Calciumstearat. Der Anteil der organischen Bindemittel wird typischerweise 2 Gew.-% nicht überschreiten und beträgt vorzugsweise weniger als 1 Gew.-%, jeweils bezogen auf die Gesamtmasse der Bestandteile der Salzmischung.

Die Herstellung der Salzmischung erfolgt in an sich bekannter Weise durch Vermischen der Bestandteile der Salzmischung in den gewünschten Mengenanteilen in hierfür geeigneten Vorrichtungen. Geeignete Vorrichtungen für das Vermengen der Komponenten der Salzmischung sind Fallmischer mit und ohne Einbauten wie Trommelmischer und Ringmischer, Schaufelmischer wie Trogmischer, Pflugschaufelmischer und Doppelwellenmischer sowie Schneckenmischer.

In einer bevorzugten Ausführungsform der Erfindung wird man eine feuchte Salzmischung in der Pressagglomeration einsetzen, die zusätzlich zu dem in der Salzmischung enthaltenen Kristallwasser freies Wasser enthält und zwar vorzugsweise 0,1 bis 3 Gew.-%, insbesondere 0,2 bis 2,8 Gew.-%, und speziell 0,5 bis 2,5 Gew.-% freies Wasser, bezogen auf die festen Bestandteile des Kaliumchlorid-Rohmaterials. Hierdurch wird die Festigkeit der Granulate erhöht und der Abrieb verringert.

Hierbei wird man in der Regel so vorgehen, dass man der Salzmischung vor der Pressagglomeration 0,1 bis 3,0 Gew.-%, insbesondere 0,2 bis 2,8 Gew.-%, und speziell 0,5 bis 2,5 Gew.-%, bezogen auf das Gewicht der Salzmischung, Wasser zusetzt. Gegebenenfalls wird man bei der Zugabe des Wassers etwaige Restfeuchten der Salzmischung, die auch als Trockenverlust bezeichnet werden, berücksichtigen, so dass die hier angegebenen Wassermengen auf die Gesamtmasse der festen Bestandteile der Salzmischung (einschließlich des gebundenen Kristallwassers) bezogen sind.

Der Zusatz des Wassers zur Salzmischung kann unmittelbar vor der Pressagglomeration, z.B. unmittelbar vor der Aufgabe der Salzmischung auf die Presse erfolgen. Häufig wird man jedoch das Wasser mit der Salzmischung vermischen und anschließend die feuchte Salzmischung der Pressagglomeration zuführen. Das Wasser kann der Salzmischung zugegeben werden, die bereits alle für die Pressagglomeration benötigten Komponenten enthält. Man kann aber auch die Zugabe des Wassers und das Vermischen der festen Bestandteile der Salzmischung kombinieren, beispielsweise indem man das Wasser während des Vermischens der festen Bestandteile zusetzt oder das Wasser in Form einer Lösung eines der festen Bestandteile, z.B. eines Mikronährstoffs oder eines Bindemittels, zusetzt. Der Zusatz des Wassers kann in an sich bekannter Weise, z.B. durch Aufsprühen auf die festen Bestandteile der Salzmischung in hierfür geeigneten Vorrichtungen, z.B. in einer der oben genannten Mischvorrichtungen erfolgen.

Die eigentliche Durchführung der Pressagglomeration kann in Analogie zu den aus dem Stand der Technik bekannten Agglomerationsverfahren erfolgen, die beispielsweise in Wolfgang Pietsch, Agglomeration Processes, Wiley - VCH, 1. Auflage, 2002, in G. Heinze, Handbuch der Agglomerationstechnik, Wiley - VCH, 2000 sowie in Perry's Chemical Engineers' Handbook, 7. Auflage, McGraw-Hill, 1997, beschrieben sind. Hier und im Folgenden werden die Begriffe Pressagglomeration und Pressgranulierung synonym verwendet.

Bei der Pressagglomeration wird die trockene oder feuchte Salzmischung aus Polyhalit und Kaliumchlorid unter Anwendung von Druck kompaktiert bzw. verpresst. Je nach Art des Kompaktierens/Verpressens werden hierbei die feinteiligen Bestandteile der Salzmischung zu grobstückigen Agglomeraten oder bandartigen Strängen agglomeriert. Anschließend erfolgt üblicherweise eine Zerkleinerung des beim Kompaktieren erhaltenen, grobteiligen Materials. Zum Kompaktieren eignen sich grundsätzlich alle die für ähnliche Zwecke bekannten Pressen, wie beispielsweise Stempel-, Strang-, Loch- und Walzenpressen.

Vorzugsweise erfolgt die Kompaktierung unter Verwendung einer Walzenpresse. Bei Walzenpressen erfolgt die Kompaktierung im Spalt zweier gegenläufig rotierender Walzen. Die Walzenoberflächen können glatt, profiliert, z. B. geriffelt, gewellt oder gewaffelt, oder mit Formmulden ausgestattet sein. Eine etwaige Profilierung der Walzenoberfläche dient vor allem der Verbesserung des Einzugsverhältnisses in den Walzenspalt. Häufig wird man Walzenpressen mit glatter oder profilierter Walzenoberfläche einsetzen. In diesem Falle ist das primäre Agglomerationsprodukt ein aus dem Walzenspalt austretender bandartiger bzw. plattenartiger Strang, der auch als Schülpe bezeichnet wird.

Die für die Kompaktierung erforderlichen Presskräfte, die üblicherweise auf die Walzenbreite bezogen und als Linienkräfte angegeben werden, liegen in der Regel im Bereich von 1 bis 75 kN/cm, insbesondere im Bereich von 20 bis 70 kN/cm und bezogen auf 1000 mm Durchmesser und einer mittleren Schülpendicke von 10 mm. In der Regel wird die Walzenpresse bei einer Walzenumfangsgeschwindigkeit im Bereich von 0,2 bis 1,6 m/s betrieben. Üblicherweise erfolgt die Kompaktierung bei Temperaturen im Bereich von 20 bis 100 °C oder bei der Temperatur, die sich aufgrund der Einwirkung der mechanischen Kräfte auf die Salzmischung einstellt. Gegebenenfalls wird man die der Granulierung zugeführte Salzmischung auf die für die Kompaktierung gewünschte Temperatur vorwärmen bzw. hat noch Restwärme z. B. aus der Trocknung. Gegebenenfalls kann die Kompaktierung mehrstufig durchgeführt werden.

Das bei der Kompaktierung erhalten Material wird man in der Regel zur Einstellung der Partikelgröße des herzustellenden Granulates einer Zerkleinerung unterwerfen. Die Zerkleinerung kann in an sich bekannter Weise, beispielsweise durch Vermahlen in hierfür geeigneten Vorrichtungen erfolgen, beispielsweise in Prallbrechern, Prallmühlen oder Walzenbrechern.

In der Regel schließt sich dem eigentlichen Granuliervorgang, d.h. der Kompaktierung und Zerkleinerung, eine Klassierung des Granulates an. Hierbei erfolgt eine Auftrennung des Granulates in Granulate mit der spezifikationsgerechten Korngröße, kleineren Granulaten (Feinanteil bzw. Unterkorn) und gegebenenfalls gröberen Granulaten (Grobanteil bzw. Überkorn). Spezifikationsgerecht ist insbesondere ein Granulat, in dem wenigstens 90 Gew.-% der Granulatpartikel eine Partikelgröße beziehungsweise einen Partikeldurchmesser im Bereich von 1 bis 8 mm, häufig 2 bis 6 mm und insbesondere im Bereich von 2 bis 5 mm aufweisen. Die Klassierung kann nach üblichen Verfahren erfolgen, insbesondere durch Sieben.

Das bei der Klassierung anfallende, nicht spezifikationsgerechte Granulat-Material, das sogenannte Rückgut, wird in der Regel in den Prozess zurückgeführt. Das Unterkorn kann direkt in den Prozess zurückgeführt werden. Das Überkorn wird in der Regel vor der Rückführung auf eine für die Pressagglomeration geeignete Partikelgröße vermahlen oder einer anderen Anwendung zugeführt.

Das so erhaltene spezifikationsgerechte Granulat kann in an sich bekannter Weise konfektioniert, z. B. verpackt und transportiert werden.

In einer bevorzugten Ausführungsform der Erfindung wird man das bei der Pressagglomeration anfallende Granulat vor der Konfektionierung einer Nachbehandlung mit Wasser unterwerfen. Sofern das Granulat klassiert wird, kann die Nachbehandlung sowohl vor als auch nach der Klassierung durchgeführt werden. Sofern die Pressagglomeration eine Zerkleinerungsstufe umfasst, erfolgt die Nachbehandlung in der Regel nach der Zerkleinerung und vor oder im Anschluss an eine etwaige Klassierung.

Für die Nachbehandlung wird man das Granulat mit einer geringen Wassermenge befeuchten. Die Wassermenge wird in der Regel so gewählt, dass sie vom Granulat vollständig adsorbiert wird. Vorzugsweise wird man zur Nachbehandlung das Wasser in einer Menge von 0,1 bis 3,0 Gew.-%, insbesondere 0,2 bis 2,5 Gew.-%, und speziell 0,5 bis 2,0 Gew.-%, bezogen auf die Masse des fertigen, unbehandelten Granulats einsetzen. Sofern man für die Herstellung des Granulats eine feuchte Salzmischung eingesetzt hat, wird man die Wassermenge für die Nachbehandlung vorzugsweise so wählen, dass die Gesamtmenge an freiem Wasser im behandelten Granulat, d.h. Wasser, das nicht als Kristallwasser gebunden vorliegt, im Bereich von 0,1 bis 5 Gew.-%, insbesondere 0,2 bis 4 Gew.-% und speziell 0,5 bis 3,5 Gew.-%, bezogen auf die Gesamtmasse des frisch hergestellten Granulats liegt.

Für die Nachbehandlung wird man in der Regel so vorgehen, dass man das Wasser möglichst gleichmäßig, insbesondere in fein verteilter Form, z.B. durch Aufsprühen bzw. in zerstäubter Form, auf das fertige Granulat aufbringt. Hierzu wird man üblicherweise das Wasser mittels ein oder mehrerer geeigneter Zerstäuber, z.B. feststehende oder rotierende Düsen, versprühen bzw. zerstäuben. Hierbei hat es sich als vorteilhaft erwiesen, wenn das Granulat während des Aufbringens des Wassers, insbesondere des zerstäubten Wassers, bewegt wird, um einen gleichmäßigeren Auftrag des Wassers auf die Oberfläche der Granulat-Partikel zu erzielen. Insbesondere wird man so vorgehen, dass man das Granulat in einer Relativbewegung durch einen Sprühkegel oder einen Sprühvorhang aus mehreren sich überlagernden Sprühkegeln führt. Beispielsweise kann man zum Aufbringen des Wassers so vorgehen, dass man das Granulat mittels eines Transportbands durch einen Bereich führt, in dem Wasser versprüht bzw. zerstäubt wird, beispielsweise indem man einen oder mehrere Sprühkegel oder einen oder mehrere Sprühvorhänge auf dem sich bewegenden Transportband erzeugt. Auch kann man beispielsweise am Übergabepunkt zwischen zwei Transportbändern einen Bereich, in dem Wasser versprüht bzw. zerstäubt wird, erzeugen. Hierdurch wird ein besonders gleichmäßiges Aufbringen des Wassers auf die Oberfläche der Granulat-Partikel erreicht. Grundsätzlich ist es auch möglich, das Wasser in Mischvorrichtungen, beispielsweise Fallmischer mit und ohne Einbauten wie Trommelmischer und Ringmischer, Schaufelmischer wie Trogmischer, Pflugschaufelmischer und Doppelwellenmischer, auf die Oberfläche der Granulat-Partikel aufzubringen. Vorzugsweise wird man beim Aufbringen des Wassers die mechanische Beanspruchung des Granulats möglichst gering halten.

Das für das Pressen und/oder für die Nachbehandlung des Granulats verwendete Wasser kann grundsätzlich reines, z.B. entionisiertes Wasser, aber auch Leitungswasser oder Prozesswasser sein.

Gegebenenfalls kann sich der Nachbehandlung ein Trocknungsschritt anschließen, beispielsweise, indem man einen Gasstrom, z.B. Frischluft, durch das Granulat leitet oder durch Wärmezufuhr oder durch eine Kombination dieser Maßnahmen.

Die nach dem erfindungsgemäßen Verfahren erhältlichen Granulate zeichnen sich durch eine für Düngemittelgranulate ausreichende Festigkeit und damit durch eine geringere Empfindlichkeit gegenüber mechanischer Belastung aus, wie sie beispielsweise beim Ein- oder Ausspeichern oder beim Umschlagen oder Transportieren der Granulate auftreten. Dies äußert sich in einer geringeren Kornzerstörung und einer geringeren Staubbildung durch Abrieb, d.h. von Partikeln mit Korngrößen unterhalb 1 mm. Daher neigen erfindungsgemäß erhaltene Granulate bei der Lagerung, insbesondere unter Druck, wie er in Haufwerken oder bei der Lagerung in Silos auftritt, in geringerem Ausmaß zum Verbacken. Überraschenderweise bleibt die verbesserte mechanische Festigkeit der Granulate auch bei Lagerung über längere Zeiträume erhalten, so dass die beim Ausspeichern bzw. beim Umschlag auftretenden mechanischen Belastungen bei den erfindungsgemäß erhaltenen Granulaten auch nach längerer Lagerung zu einer geringeren Kornzerstörung führen.

Die erfindungsgemäß erhältlichen Granulate sind daher nicht nur aufgrund ihrer Bestandteile, insbesondere aufgrund der gleichzeitigen Anwesenheit von Kalium, Magnesium und Schwefel, sondern auch aufgrund ihrer mechanischen Festigkeit als Düngemittel geeignet. Dementsprechend können die erfindungsgemäß erhältlichen Granulate insbesondere in den für kaliumhaltige Düngemittel üblichen Düngemittelanwendungen eingesetzt werden.

Die folgenden Beispiele dienen der Erläuterung der Erfindung.

Abkürzungen:
BF: Bruchfestigkeit/Berstfeste
Bsp.: Beispiel
n.b.: nicht bestimmt

Die Bestimmung der Korngrößenverteilung erfolgte auf einer analytischen Vibrationssiebmaschine (Typ Retsch AS 200 control).

Der Trockenverlust TV wurde in Anlehnung an DIN EN 12880:2000 bestimmt, indem man eine Probe von etwa 30 g in einem Trockenschrank bei Temperaturen im Bereich von 105 ± 5 °C bei Umgebungsdruck 2 h trocknete und das Gewicht der Probe vor und nach der Trocknung bestimmte.

Der Glühverlust wurde in Anlehnung an die DIN EN 15935:2012 (mit dem Unterschied, dass zuvor nicht bei 105 °C getrocknet wurde) bestimmt, indem man eine Probe von etwa 2000 g in einem Muffelofen bei Temperaturen im Bereich von 550 ± 25 °C bei Umgebungsdruck 2 h glühte und das Gewicht der Probe vor und nach der Trocknung bestimmte.

Die Berstfeste bzw. Bruchfestigkeit wurde mit Hilfe des Tabletten-Bruchfestigkeitstesters Typ TBH 425D der Firma ERWEKA auf Basis von Messungen an 56 Einzelgranalien unterschiedlicher Partikelgröße (Fraktion 2,5 - 3,15 mm) ermittelt und der Mittelwert berechnet. Bestimmt wurde die Kraft, die erforderlich war, um die Granalie zwischen Stempel und Platte des Bruchfestigkeitstesters zu zerbrechen. Granalien mit einer Berstfeste > 400 N und solche mit einer Berstfeste < 10 N wurden bei der Mittelwertbildung nicht berücksichtigt.

Die Werte für den Abrieb wurden mit dem Rolltrommelverfahren nach Busch bestimmt. Hierzu wurden 50 g des Granulats mit einer Korngrößenfraktion von 2,5 - 3,15 mm zusammen mit 70 Stahlkugeln (Durchmesser 10 mm, 283 g) in eine Rolltrommel eines handelsüblichen Abriebtesters, z. B. ERWEKA, Typ TAR 20, gegeben und 10 min bei 40 U*min⁻¹ gedreht. Anschließend wurde der Inhalt der Trommel auf ein Sieb mit einer Maschenweite von 5 mm, unter dem ein Sieb mit einer Maschenweite von 0,5 mm angeordnet war, 1 min auf einer Siebmaschine (Typ Retsch AS 200 control) gesiebt. Der abgesiebte Feinanteil entspricht dem Abrieb.

Es wurden die folgenden Einsatzstoffe verwendet:
Kaliumchlorid 1 (KCI-1):
   Kaliumchlorid (unbehandelt) mit folgender Spezifikation:
   KCI-Gehalt von 96,8 Gew.-% (= 60,4 % K₂O).
   Gesamtgehalt Ca + Mg: 0,29 Gew.-%
   Trocknungsverlust bei 105°C: < 0,1 Gew.-%.
   Das Kaliumchlorid wies folgende Korngrößenverteilung auf: d₁₀: 54,12 µm, d₅₀: 111,1 µm, d₉₀: 184,3 µm.
Kaliumchlorid 2 (KCI-2):
   KCI-Gehalt von 91,7 Gew.-% (= 57,8 % K₂O)
   NaCl-Gehalt von 8,3 Gew.-%.
   Die Partikel des Kaliumchlorids 2 wiesen Korngrößen unterhalb 500 µm auf.

### Polyhalit:

| | |
|---|---|
| Gehalt Kalium: | 11,4 Gew.-% |
| Gehalt Magnesium: | 4,1 Gew.-% |
| Gehalt Calcium: | 12,6 Gew.-% |
| Gehalt Sulfat: | 59,6 Gew.-% |
| Gehalt Chlorid: | 3,1 Gew.-% |
| Gehalt Natrium: | 1,9 Gew.-% |

Trocknungsverlust bei 105°C: < 0,3 Gew.-%.
Glühverlust bei 550°C: 6,7 Gew.-%.

Das Polyhalit wies folgende Korngrößenverteilung auf:
d₁₀: 8,3 µm, d₅₀: 475,4 µm, d₉₀: 836,5 µm.

### Herstellung der Granulate:

Für die Pressagglomeration wurde eine Laborpresse der Fa. Bepex, Typ L200/50 eingesetzt, die zwei gegenläufig rotierende Walzen mit stäbchenförmigen Vertiefungen auf der Walzenoberfläche aufwies (Walzendurchmesser 200 mm, Arbeitsbreite 50 mm). Die Laborpresse wurde mit einer spezifischen Presskraft von 28 kN/cm und einer Walzendrehzahl von 6,2 U/min betrieben. Die Zufuhr der Salzmischung erfolgte mittels einer über den Presswalzen angeordneten Stopfschnecke. Die Aufgaberate an Salzmischung betrug etwa 0,5 bis 2 kg/min.

Die Zerkleinerung der beim Kompaktieren mittels der Laborpresse anfallenden Schülpen erfolgte mit einer Prallmühle der Fa. Hazemag. Die Prallmühle wies 2 Prallwerke auf und hatte einen Rotordurchmesser von 300 mm. Die Spaltweite für das vordere Prallwerk wurde auf 10 mm und für das hintere Prallwerk auf 5 mm eingestellt. Die Prallmühle wurde mit einer Umfangsgeschwindigkeit des Rotors von 15 m/s betrieben. Die Zerkleinerung erfolgte unmittelbar im Anschluss an die Herstellung der Schülpen. Der Durchsatz an Schülpen lag bei etwa 0,5 bis 2 kg/s.

Anschließend wurde das Material mit einer handelsüblichen Siebvorrichtung klassiert, die Fraktion mit Korngröße 2 - 5 mm (Produkt) abgetrennt. Die Fraktion mit Korngröße < 2 mm kann zur Aufgabe zurückgeführt werden (Feingut). Der Anteil mit Korngröße > 5 mm (Grobgut) kann aufgemahlen und ebenfalls zurückgeführt werden. Für die Bestimmung der Bruchfestigkeit bzw. Berstfeste der Granulate wurde eine Testfraktion (Testgranulat) mit einer Korngröße von 2,5 - 3,15 mm ausgesiebt.

### Beispiele 1 bis 4 und Vergleichsbeispiel V1:

Kaliumchlorid 1 und Polyhalit wurden in dem in Tabelle 1 angegebenen Massenverhältnis in einen Intensivmischer gegeben und 1 min gemischt. Die Mischung wurde dann mit einer Aufgaberate von 0,5 bis 2 kg/min auf die Laborpresse gegeben und unmittelbar anschließend zerkleinert und klassiert.

Anschließend wurde das erhaltene Granulat unter Umgebungsbedingungen gelagert und nach 1 Tag, 7 Tagen bzw. 14 Tagen Bruchfestigkeit und Abrieb bestimmt. Die Ergebnisse sind in Tabelle 1 zusammengestellt.

### Bespiel 5:

Kaliumchlorid 2 und Polyhalit wurden in dem in Tabelle 1 angegebenen Massenverhältnis in einen Intensivmischer gegeben und 1 min. gemischt. Die Mischung wurde dann mit einer Aufgaberate von 0,5 bis 2 kg/min auf die Laborpresse gegeben und unmittelbar anschließend zerkleinert und klassiert.

Anschließend wurde das erhaltene Granulat unter Umgebungsbedingungen gelagert und nach 1 Tag, 7 Tagen bzw. 14 Tagen Bruchfestigkeit und Abrieb bestimmt. Die Ergebnisse sind in Tabelle 1 zusammengestellt.

**Tabelle 1: Verpressen ohne Zusatz von Wasser ohne Nachbehandlung**

| | ohne Wasser | | Abrieb | BF | Abrieb | BF | Abrieb | BF |
|---|---|---|---|---|---|---|---|---|
| Bsp. | Polyhalit | KCl-1 | 1 d | | 7 d | | 14 d | |
| V1 | 100 | 0 | 92% | 10 N | n.b. | n.b. | 88% | 10 N |
| 1 | 60 | 40 | 40% | 25 N | 38% | 28 N | 38% | 25 N |
| 2 | 50 | 50 | 24% | 33 N | 24% | 34 N | 23% | 32 N |
| 3 | 43 | 57 | 20% | 37 N | 20% | 36 N | 20% | 38 N |
| 4 | 20 | 80 | 10% | 48 N | 8% | 57 N | 8% | 76 N |

| | Polyhalit | KCl-2 | | | | | | |
|---|---|---|---|---|---|---|---|---|
| 5 | 55 | 45 | 44% | 27 N | 38% | 26 N | 39% | 27 N |

### Beispiele 6 bis 9 und Vergleichsbeispiel V2:

Kaliumchlorid 1 und Polyhalit wurden in dem in Tabelle 2 angegebenen Massenverhältnis nach der für die Beispiele 1 bis 5 angegebenen Vorschrift zu einem Granulat verarbeitet, mit dem Unterschied, dass man vor dem Klassieren das zerkleinerte Produkt in einem Mischbehälter unter manueller Durchmischung mit 2 Gewichtsteilen Wasser je 100 Gewichtsteile Granulat vermischte (Nachbehandlung).

Anschließend wurde das erhaltene Granulat unter Umgebungsbedingungen gelagert und nach 1 Tag, 7 Tagen bzw. 14 Tagen Bruchfestigkeit und Abrieb bestimmt. Die Ergebnisse sind in Tabelle 2 zusammengestellt.

**Tabelle 2: Verpressen ohne Zusatz von Wasser mit Nachbehandlung (2 Gew.-% H₂O)**

| | ohne Wasser + Nachbehandlung | | Abrieb | BF | Abrieb | BF | Abrieb | BF |
|---|---|---|---|---|---|---|---|---|
| Bsp. | Polyhalit | KCl-1 | 1 d | | 7 d | | 14 d | |
| V2 | 100 | 0 | 90% | 12 N | n.b. | n.b. | 80% | 14 N |
| 6 | 75 | 25 | 63% | 22 N | 64% | 20 N | 56% | 21 N |
| 7 | 60 | 40 | 22% | 17 N | 12% | 36 N | n.b. | n.b. |
| 8 | 50 | 50 | 5% | 24 N | 8% | 43 N | n.b. | n.b. |
| 9 | 43 | 57 | 6% | 21 N | 8% | 45 N | n.b. | n.b. |

### Beispiele 10 bis 12 und Vergleichsbeispiel V3:

Kaliumchlorid 1 und Polyhalit wurden in dem in Tabelle 3 angegebenen Massenverhältnis zusammen mit 1 Gewichtsteil Wasser, bezogen auf 100 Gewichtsteile der Salzmischung, in einen Intensivmischer gegeben und 1 min gemischt. Die Mischung wurde dann mit einer Aufgaberate von 0,5 bis 2 kg/min auf die Laborpresse gegeben und unmittelbar anschließend zerkleinert und klassiert.

Anschließend wurde das erhaltene Granulat unter Umgebungsbedingungen gelagert und nach 1 Tag, 7 Tagen bzw. 14 Tagen Bruchfestigkeit und Abrieb bestimmt. Die Ergebnisse sind in Tabelle 3 zusammengestellt.

**Tabelle 3: Verpressen mit Zusatz von Wasser (1 % H₂O) ohne Nachbehandlung**

| | 1 Gew.-% Wasser | | Abrieb | BF | Abrieb | BF | Abrieb | BF |
|---|---|---|---|---|---|---|---|---|
| Bsp. | Polyhalit | KCl-1 | 1 d | | 7 d | | 14 d | |
| V3 | 100 | 0 | 80% | 17 N | 60% | 22 N | 61% | 18 N |
| 10 | 75 | 25 | 48% | 25 N | 32% | 25 N | 31% | 25 N |
| 11 | 50 | 50 | 26% | 30 N | 21% | 34 N | 20% | 34 N |
| 12 | 40 | 60 | 19% | 30 N | 14% | 42 N | 15% | 45 N |

### Beispiele 13 bis 15:

Kaliumchlorid 1 und Polyhalit wurden in dem in Tabelle 4 angegebenen Massenverhältnis nach der für die Beispiele 10 bis 12 angegebenen Vorschrift zu einem Granulat verarbeitet, mit dem Unterschied, dass man vor dem Klassieren das zerkleinerte Produkt in einem Mischbehälter unter manueller Durchmischung mit 1 Gewichtsteil Wasser je 100 Gewichtsteile Granulat vermischte (Nachbehandlung).

Anschließend wurde das erhaltene Granulat unter Umgebungsbedingungen gelagert und nach 1 Tag, 7 Tagen bzw. 14 Tagen Bruchfestigkeit und Abrieb bestimmt. Die Ergebnisse sind in Tabelle 4 zusammengestellt.

**Tabelle 4: Verpressen mit Zusatz von Wasser (1 % H₂O) und mit Nachbehandlung (1 % H₂O)**

| | 1 Gew.-% Wasser+ Nachbehandlung | | Abrieb | BF | Abrieb | BF | Abrieb | BF |
|---|---|---|---|---|---|---|---|---|
| Bsp. | Polyhalit | KCl-1 | 1 d | | 7 d | | 14 d | |
| 13 | 75 | 25 | 34% | 25 N | 33% | 26 N | 31% | 30 N |
| 14 | 50 | 50 | 16% | 34 N | 15% | 36 N | 15% | 37 N |
| 15 | 40 | 60 | 13% | 42 N | 12% | 44 N | 12% | 43 N |

### Beispiel 16:

Kaliumchlorid 1 und Polyhalit wurden in dem in Tabelle 5 angegebenen Massenverhältnis nach der für die Beispiele 10 bis 12 angegebenen Vorschrift zu einem Granulat verarbeitet, mit dem Unterschied, dass man die Salzmischung vor dem Verpressen mit 2 Gewichtsteilen Wasser je 100 Gewichtsteile Granulat vermischte.

Anschließend wurde das erhaltene Granulat unter Umgebungsbedingungen gelagert und nach 1 Tag, 7 Tagen bzw. 14 Tagen Bruchfestigkeit und Abrieb bestimmt. Die Ergebnisse sind in Tabelle 5 zusammengestellt.

**Tabelle 5: Verpressen mit Zusatz von Wasser (2 % H₂O) ohne Nachbehandlung**

| | 2 Gew.-% Wasser | | Abrieb | BF | Abrieb | BF | Abrieb | BF |
|---|---|---|---|---|---|---|---|---|
| Bsp. | Polyhalit | KCl-1 | 1 d | | 7 d | | 14 d | |
| 16 | 75 | 25 | 51% | 12 N | 33% | 23 N | 34% | 23 N |

### Beispiel 17:

Eine Salzmischung, enthaltend Kaliumchlorid 1 und Polyhalit in dem in Tabelle 6 angegebenen Massenverhältnis und weiterhin Borax wurde nach der für die Beispiele 1 bis 4 angegebenen Vorschrift zu einem Granulat verarbeitet. Die Menge an Borax wurde so gewählt, dass der Gehalt an elementarem Bor 0,5 Gew.-%, bezogen auf die Gesamtmenge an Kaliumchlorid und Polyhalit, betrug.

Anschließend wurde das erhaltene Granulat unter Umgebungsbedingungen gelagert und nach 1 Tag, 7 Tagen bzw. 14 Tagen Bruchfestigkeit und Abrieb bestimmt. Die Ergebnisse sind in Tabelle 6 zusammengestellt.

**Tabelle 6: Verpressen ohne Zusatz von Wasser und ohne Nachbehandlung**

| | 0,5 Gew.-% Bor + ohne Wasser | | Abrieb | BF | Abrieb | BF | Abrieb | BF |
|---|---|---|---|---|---|---|---|---|
| Bsp. | Polyhalit | KCl-1 | 1 d | | 7 d | | 14 d | |
| 17 | 60 | 40 | 26% | 28 N | 25% | 33 N | 26% | 32N |

## Patentansprüche

1. Verfahren zur Herstellung polyhalithaltiger Düngemittelgranulate, umfassend eine Pressagglomeration einer Salzmischung aus feinteiligem Polyhalit mit feinteiligem Kaliumchlorid, wobei das Massenverhältnis von feinteiligem Polyhalit zu feinteiligem Kaliumchlorid im Bereich von 1 : 5 bis 4 : 1 liegt,
wobei K₂Ca₂Mg[SO₄]₄·2H₂O und KCl wenigstens 80 Gew.-% und insbesondere wenigstens 85 Gew.-% der Gesamtmasse der in der zur Pressagglomeration eingesetzten Salzmischung enthaltenen festen Bestandteile ausmachen.

2. Verfahren nach Anspruch 1, wobei man der Salzmischung vor der Pressagglomeration 0,1 bis 3,0 Gew.-%, bezogen auf das Gewicht der Salzmischung, Wasser zusetzt.

3. Verfahren nach Anspruch 2, wobei das Wasser mit der Salzmischung vermischt und die feuchte Salzmischung der Pressagglomeration zugeführt wird.

4. Verfahren nach einem der vorhergehenden Ansprüche, wobei wenigstens 80 Gew.-% der Partikel des feinteiligen Polyhalits in der Salzmischung eine Teilchengröße im Bereich von 0,01 bis 2 mm aufweisen.

5. Verfahren nach einem der vorhergehenden Ansprüche, wobei das feinteilige Polyhalit ein beim Zerkleinern eines bergmännisch abgebauten Polyhalits anfallendes feinteiliges Polyhalit ist.

6. Verfahren nach einem der vorhergehenden Ansprüche, wobei wenigstens 80 Gew.-% der Partikel des feinteiligen Kaliumchlorids in der Salzmischung eine Teilchengröße im Bereich von 0,01 bis 2 mm aufweisen.

7. Verfahren nach einem der vorhergehenden Ansprüche, wobei das feinteilige Kaliumchlorid einen Gehalt an Kalium von wenigstens 50 Gew.-%, gerechnet als K₂O, aufweist.

8. Verfahren nach einem der vorhergehenden Ansprüche, wobei sich der Pressagglomeration eine Behandlung des frisch hergestellten Granulats mit Wasser anschließt.

9. Verfahren nach Anspruch 8, wobei die für die Behandlung verwendete Wassermenge im Bereich von 0,1 bis 3,0 Gew.-%, bezogen auf die Gesamtmasse des frisch hergestellten Granulats liegt.

10. Verfahren nach einem der Ansprüche 8 oder 9, wobei die für die Behandlung verwendete Wassermenge so gewählt wird, dass die Gesamtmenge an ungebundenem Wasser im behandelten Granulat im Bereich von 0,1 bis 5 Gew.-%, bezogen auf die Gesamtmasse des frisch hergestellten Granulats liegt.

11. Verfahren nach einem der vorhergehenden Ansprüche, wobei die Herstellung des Granulats (i) ein Verpressen der Salzmischung mittels einer Walzenpresse, (ii) gefolgt von einer Zerkleinerung der dabei anfallenden Schülpen und (iii) eine Klassierung des beim Zerkleinern anfallenden Granulats umfasst.

12. Verfahren nach Anspruch 11, wobei man das bei der Klassierung anfallende Unterkorn in die Pressagglomeration zurückführt.

## Claims

1. Process for preparing polyhalite-containing fertilizer granules, comprising a press agglomeration of a salt mixture of finely divided polyhalite with finely divided potassium chloride, the mass ratio of finely divided polyhalite to finely divided potassium chloride being in the range from 1:5 to 4:1, wherein K₂Ca₂Mg[SO₄]₄·2H₂O and KCl make up at least 80% by weight and more particularly at least 85% by weight of the total mass of the solid constituents contained in the salt mixture used for the press agglomeration.

2. Process according to Claim 1, wherein 0.1% to 3.0% by weight, based on the weight of the salt mixture, of water is added to the salt mixture before the press agglomeration.

3. Process according to Claim 2, wherein the water is mixed with the salt mixture and the wet salt mixture is supplied to the press agglomeration.

4. Process according to any of the preceding claims, wherein at least 80% by weight of the particles of the finely divided polyhalite in the salt mixture have a particle size in the range from 0.01 to 2 mm.

5. Process according to any of the preceding claims, wherein the finely divided polyhalite is a finely divided polyhalite obtained on comminution of a mined polyhalite.

6. Process according to any of the preceding claims, wherein at least 80% by weight of the particles of the finely divided potassium chloride in the salt mixture have a particle size in the range from 0.01 to 2 mm.

7. Process according to any of the preceding claims, wherein the finely divided potassium chloride has a potassium content of at least 50% by weight, calculated as K₂O.

8. Process according to any of the preceding claims, wherein the press agglomeration is followed by treatment of the freshly prepared granules with water.

9. Process according to Claim 8, wherein the amount of water used for the treatment is in the range from 0.1% to 3.0% by weight, based on the total mass of the freshly prepared granules.

10. Process according to either of Claims 8 or 9, wherein the amount of water used for the treatment is selected such that the total amount of unbound water in the treated granules is in the range from 0.1% to 5% by weight, based on the total mass of the freshly prepared granules.

11. Process according to any of the preceding claims, wherein the preparation of the granules comprises (i) pressing of the salt mixture by means of a roll press, (ii) followed by comminution of the resultant flakes and (iii) classification of the granules obtained on comminution.

12. Process according to Claim 11, wherein the undersize obtained in the classification is returned to the press agglomeration.

## Revendications

1. Procédé pour la production de granulés d'engrais contenant de la polyhalite, comprenant une agglomération par compression d'un mélange de sels à base de polyhalite finement particulaire avec du chlorure de potassium finement particulaire, le rapport en masse de polyhalite finement particulaire à chlorure de potassium finement particulaire se situant dans la plage de 1 : 5 à 4 : 1, K₂Ca₂Mg[SO₄]₄.2H₂O et KCl constituant au moins 80 % en poids et en particulier au moins 85 % en poids de la masse totale des constituants solides contenus dans le mélange de sels utilisé dans l'agglomération par compression.

2. Procédé selon la revendication 1, dans lequel on ajoute au mélange de sels, avant l'agglomération par compression, 0,1 à 3,0 % en poids d'eau, par rapport au poids du mélange de sels.

3. Procédé selon la revendication 2, dans lequel l'eau est mélangée avec le mélange de sels et le mélange de sels humide est envoyé à l'agglomération par compression.

4. Procédé selon l'une quelconque des revendications précédentes, dans lequel au moins 80 % en poids des particules de la polyhalite finement particulaire dans le mélange de sels présentent une taille de particule dans la plage de 0,01 à 2 mm.

5. Procédé selon l'une quelconque des revendications précédentes, dans lequel la polyhalite finement particulaire est une polyhalite finement particulaire produite lors de la fragmentation d'une polyhalite dégradée par exploitation minière.

6. Procédé selon l'une quelconque des revendications précédentes, dans lequel au moins 80 % en poids des particules du chlorure de potassium finement particulaire dans le mélange de sels présentent une taille de particule dans la plage de 0,01 à 2 mm.

7. Procédé selon l'une quelconque des revendications précédentes, dans lequel le chlorure de potassium finement particulaire présente une teneur en potassium d'au moins 50 % en poids, calculée en tant que K₂O.

8. Procédé selon l'une quelconque des revendications précédentes, dans lequel à l'agglomération par compression fait suite un traitement par de l'eau du produit granulé fraîchement préparé.

9. Procédé selon la revendication 8, dans lequel la quantité d'eau utilisée pour le traitement se situe dans la plage de 0,1 à 3,0 % en poids, par rapport à la masse totale du produit granulé fraîchement préparé.

10. Procédé selon l'une quelconque des revendications 8 et 9, dans lequel la quantité d'eau utilisée pour le traitement est choisie de telle façon que la quantité totale d'eau non liée dans le produit granulé traité se situe dans la plage de 0,1 à 5 % en poids, par rapport à la masse totale du produit granulé fraîchement préparé.

11. Procédé selon l'une quelconque des revendications précédentes, dans lequel la préparation du produit granulé comprend (i) une compression du mélange de sels au moyen d'une presse à cylindres, (ii) suivie d'une fragmentation des plaquettes ainsi produites et (iii) une classification du produit granulé obtenu lors de la fragmentation.

12. Procédé selon la revendication 11, dans lequel on renvoie dans l'agglomération par compression les fines produites lors de la classification.
